Europäisches Patentamt

European Patent Office

Office européen des brevets

(19)

(11) EP 1 096 295 A1

(12) EUROPEAN PATENT APPLICATION

(43) Date of publication:
02.05.2001 Bulletin 2001/18

(51) Int Cl.⁷: G02B 27/58

(21) Application number: 99121512.0

(22) Date of filing: 28.10.1999

(84) Designated Contracting States:
AT BE CH CY DE DK ES FI FR GB GR IE IT LI LU
MC NL PT SE
Designated Extension States:
AL LT LV MK RO SI

(71) Applicant: ITT MANUFACTURING ENTERPRISES,
INC.
Wilmington, Delaware 19801 (US)

(72) Inventor: Gregory, Donald D.
Fort Wayne, Indiana 46825 (US)

(74) Representative:
TER MEER STEINMEISTER & PARTNER GbR
Patentanwälte,
Mauerkircherstrasse 45
81679 München (DE)

(54) Apparatus and method for providing optical sensors with improved resolution

(57) An optical sensor (10) comprised of an optical system (12) having a numerical aperture (NA) which provides a corresponding resolution and a detector array (28, 30) for providing high spatial resolution imaging data for use in improving said resolution, wherein said detector array (28, 30) has at least three detectors (14) which are spread across the central lobe (18) of the diffraction pattern which is determined by said numerical aperture (NA).

FIG. 1

EP 1 096 295 A1

**Description**

## BACKGROUND OF THE INVENTION

### Field of the Invention

The present invention relates generally to optical devices, and more particularly to an optical sensor which is specifically configured to be utilized in conjunction with an image processing technique in order to provide a much higher level of resolution without significantly increasing the size of the sensor.

### Description of the Prior Art

Optical sensors are devices which for decades have been utilized to detect and record various optical images. Various types of optical sensors have been developed which work in the Ultra Violet Bands, Infra Red Bands as well as in the Visible Bands of operation. Examples of such devices include Weather Sensors, Terrain Mapping Sensors, Surveillance Sensors, Medical Probes, Telescopes and Television Cameras.

An optical sensor typically includes an optical system and one or more detectors. The optical system portion is made up of various combinations of lenses, mirrors and filters which is utilized to focus light onto a focal plane located at the image plane of the optical system. The detectors which make up the image plane is utilized to convert the light received from the optical system into electrical signals. Instead of detectors, other types of optical sensors utilize film to record the images. In this case, the grain size of the film is analogous to the detectors described above.

An important performance characteristic of optical sensors is known as "spatial resolution" which is the size of the smallest object that can be resolved in the image, or equivalently is the ability to differentiate between closely spaced objects. If the optical system of these sensors are free from optical aberrations which means being "well corrected" the spatial resolution is ultimately limited by one of two factors. Either the resolution is limited by the size of the detectors in the focal plane or by diffraction effects.

Diffraction is a well known characteristic of light which among other things describes how light passes through an aperture of an optical system. Diffraction causes the light passing through an aperture to spread out which causes points of an image not to be a point, but rather a pattern of light known as a diffraction pattern diffused across a focal plane. For a well corrected unobscured optical system known as a diffraction limited system, the diffraction pattern includes a very bright central spot, surrounded by bright and dark rings of much less intensity which decrease in intensity as the distance from the ring to the central spot increases.

An optical sensor that is designed to be diffraction limited, typically, has a very well corrected optical system and detectors sized so that the central spot of the diffraction pattern just fits within the active area of the detector. Making the detectors any smaller does not serve any purpose and is considerably more costly due to the added cost of the extra detectors and the associated electronics.

The size of the aperture utilized in the optical system also is an important factor due to diffraction effects. The size of the aperture is expressed differently depending on the type of application. In applications such as camera lenses and telescope objectives, the aperture is normally expressed as a f-number which is the ratio of the effective focal length to the size of the clear aperture. In applications such as microscope objectives, the aperture is normally expressed as a Numerical aperture (NA) which is the index of refraction times the sine of the half angle of the cone of illumination. For a given focal length, a high f-number corresponds to a smaller aperture, while a higher Numerical aperture corresponds to a larger aperture.

A drawback with conventional optical sensors relates to the size of the aperture required for a given level of resolution. In order to increase the resolution of such devices, a larger aperture is required. In many situations, the use of such a system is very costly. This is because utilizing a larger 25 aperture requires the use of a significantly larger optical system. The cost for larger systems which have apertures with diameters greater than one foot is proportional to the diameter of the aperture raised to a power of "x". The variable "x" typically ranges from 2.1 to 2.9 depending on a number of other particulars associated with the sensor such as its wave band, field of regard and field of view.

The consideration for the size of the optical sensor is particularly relevant in systems that fly on some type of platform, either in space or in the air. Under such conditions, the sensor must be light weight, strong and capable of surviving the rigors of the flight environment. Thus, the cost of going to a larger optical system can be in the hundreds of millions of dollars for some of the larger and more sophisticated sensors. Further, the size of the sensor may also be limited by such practical considerations as the amount of weight or space the host rocket, plane, balloon or vehicle accommodates. In these situations, a larger system cannot be implemented regardless of the cost.

A number of optical imaging techniques have been developed which are directed at increasing spatial resolution. One such example attempts to increase the resolution of optical sensors by utilizing a condition known as sub-pixel resolution. In sub-pixel resolution, the optical system is limited in spatial resolution not by diffraction, but by the size of the detectors or pixels. In this case, a larger detector size is utilized to prevent a portion of the higher spatial frequencies of the image formed by the optical system from being observed. Thus, sub-pixel resolution attempts to reconstruct an image that includes these higher spatial frequencies which are already in the image. This technique does not attempt to reconstruct an image that is smaller than the diffraction limit, which is even smaller than the sub-pixel resolution. Further, this technique also does not require hardware or system operation changes in order to achieve sub-pixel reconstruction. Examples of sub-pixel resolution techniques are disclosed in an article ADVANCES SIGNAL PROCESSING ALGORITHMS, ARCHITECTURES AND IMPLEMENTATIONS II, by J.B. Abbis et al., The International Society For Optical Engineering, Volume 1566, P.365.

Other examples of optical imaging techniques are disclosed in another article entitled SUPERRESOLUTION ALGORITHMS FOR A MODIFIED HOPFIELD NEURAL NETWORK, by J.B. Abbiss, IEEE Transactions On Signal Processing, Vol. 39, No. 7, July 1991 and in a paper entitled FAST REGULATED DECONVOLUTION IN OPTICS AND RADARS, by J.B. Abbiss, presented at the 3rd IMA Conference on Mathematics in Signal Processing. These techniques utilize linear equation and matrix techniques in order to restore signals or images from a limited discrete data set.

The previously described techniques have a number of drawbacks in regard to optical sensors. First of all, only one of these techniques is directed towards a diffraction limited device. Also, these techniques often produce forms of solutions which are not practically solved due to the constraints of computing power in airborne systems. This is because such solutions often yield large rounding errors and require a large number of operations. Further, none of the previously described techniques disclose either the types of detectors or other system parameters which are utilized along with these techniques.

It is therefore, an object of the present invention to provide a technique for increasing the resolution of an optical sensor without utilizing a substantially larger aperture.

## SUMMARY OF THE INVENTION

An optical sensor is disclosed of the type typically including an optical system for focusing light onto a focal plane. The optical system having a predetermined Numerical aperture which provides a corresponding level of spatial resolution. The optical sensor also including means for converting the light focused onto the focal plane into electrical signals including imaging data. The optical sensor further including means for processing the imaging data in order to provide a desired level of spatial resolution which is substantially higher than the corresponding level of spatial resolution.

## BRIEF DESCRIPTION OF THE DRAWINGS

The above objects, further features and advantages of the present invention are described in detail below in conjunction with the drawings, of which:

FIGURE 1 is a general block diagram of the optical sensor according to the present invention;
FIGURE 2 is a diagram of a linear detector array according to the present invention;
FIGURE 3 is a diagram of a matrix detector array according to the present invention;
FIGURE 4 is a diagram illustrating the size of an individual detector according to the present invention;
FIGURE 5 is a diagram illustrating that a plurality of detectors are spread across the central diffraction lobe according to the present invention;
FIGURE 6 is a diagram of a multi-linear detector array according to the present invention;
FIGURE 7 is a diagram of another embodiment of a multi-linear detector array according to the present invention;
FIGURE 8 is diagram illustrating the operation of a beam splitter included into the optical system according to the present invention;
FIGURE 9 is a flow diagram of the Linear Algebra Technique according to the present invention;
FIGURE 10 is a diagram illustrating the form of the matrix **H** utilized in the Linear Algebra Technique according to the present invention;
FIGURE 11 is a diagram illustrating the Multiple Image Reconstruction Technique according to the present invention;
FIGURE 12 is a flow diagram of the Multiple Image Reconstruction Technique according to the present invention;
FIGURE 13 is a flow diagram of the Non-Linear Reconstruction Technique according to the present invention;
FIGURE 14 is a flow diagram of the Non-linear Multiple Band Reconstruction Technique according to the present invention; and
FIGURE 15 depicts the optical transfer function achieved by the present invention.

## DETAILED DESCRIPTION OF EMBODIMENTS

The present invention is directed to an optical sensor which overcomes the difficulty of requiring larger apertures in order to achieve resolutions below the diffraction limit.

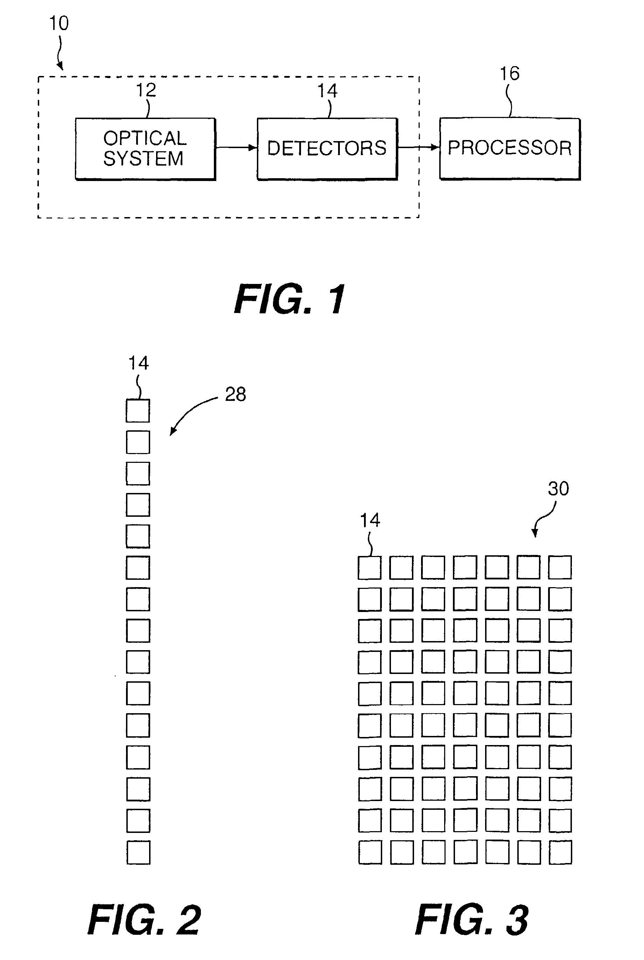

Referring to FIGURE 1, there is shown a general block diagram of the optical sensor according to the present invention. The sensor 10 as in conventional devices includes an optical system 12 and detectors 14. The optical system 12 which includes various combinations of lenses, mirrors and filters depending on the type of application is utilized to focus light onto a focal plane where the detectors 14 are located. The optical system 12 also includes a predetermined aperture size corresponding to a particular Numeral aperture (NA) which in conventional diffraction limited devices limits the amount of spatial resolution that is attainable. As previously described, this is due to diffraction blurring effects.

The detectors 14 are utilized to convert the light received from the optical system 12 into electrical signals which includes the imaging data utilized to generate images. In conventional sensors, the detectors are configured in a linear array for Scanning systems or in a matrix array for Starring systems. In Scanning systems, the detector linear array is swept in a direction perpendicular to the length of the array which generates imaging data one scan line at a time which corresponds to one line of the image. In Starring systems, the matrix array is not moved and generates all of the imaging data for the image simultaneously. Thus, each detector of the matrix array corresponds to one pixel of the image. It is intended that the detectors 14 of the present invention are also configurable as a linear array or a matrix array depending on the type of system being utilized.

The detectors 14 are also capable of being embodied by a number of different type of devices depending on the wavelength of light utilized by the present invention. For example, in the ultraviolet and X-Ray range such detectors as semitransparent photocathodes and opaque photocathodes are capable of being utilized. In the visible range, such detectors include vacuum phototubes, photomultipliers, photoconductors and photodiodes, while in the infrared range, such detectors also include photoconductors, photodiodes, pryoelectric, photon drag and golay cells devices.

Further, in the present invention, the configuration of various elements of the sensor 10 is dependent on the particular image processing technique utilized. As will be described in detail later, the present invention includes at least five alternative image processing techniques.

In a first case, the sensor 10 must include detectors 14 that have an "instantaneous field of view" that is equal or less than the desired level of spatial resolution. Thus, if the required resolution is one meter or less, then the "instantaneous field of view" of the detectors must correspond to one meter or less, even though the central lobe of the diffraction pattern is much larger. This makes, the pixel size of the image produced by the sensor 10 smaller than the central diffraction lobe. Such a configuration adds additional cost to the sensors. However, for large systems the increase in cost is less than the cost of a larger system.

The sensor 10 can be configured according to Case one in one of two ways. One way is to utilize a larger amount of detectors 14 and a smaller size of detectors 14. In conventional sensors, the number of detectors utilized varies any where from one to thousands or to millions depending on the type of application.

In the present invention, at least as three times as many detectors 14 than normal, and preferably at least five times as many, are required in order to achieve the higher resolution. A diagram of a linear detector array according to the present invention is shown in FIGURE 2, while a diagram of a matrix detector array according to the present invention is shown in FIGURE 3. The number of detectors 14 included in these arrays 28,30 depends on the particular application. However, in order to achieve the higher resolution, these arrays will include a multiple of the number of detectors present in conventional sensors for a given application.

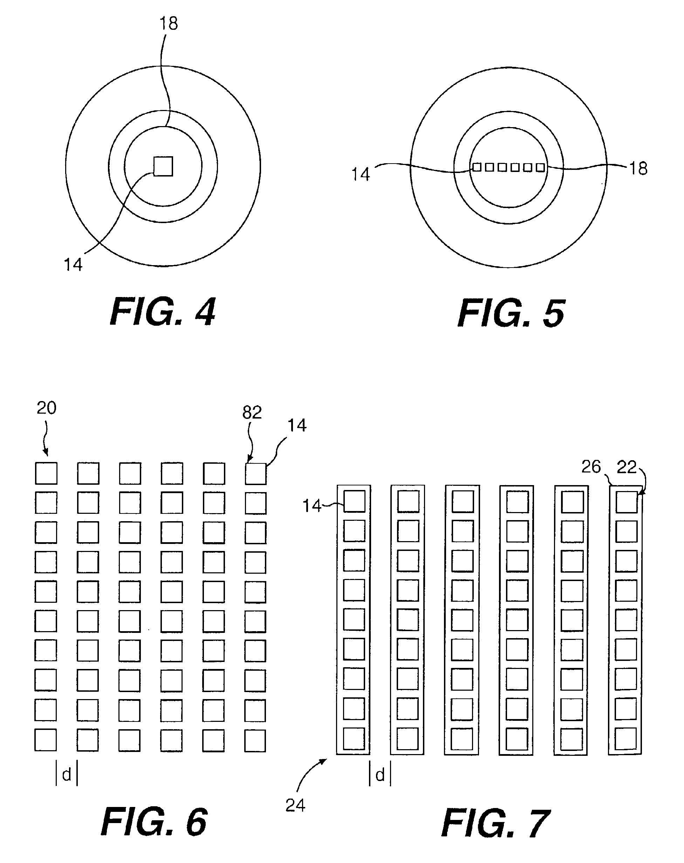

In conventional sensors, the size of the individual detector is never smaller than size of the central diffraction lobe. This is because utilizing smaller sensors serves no purpose due to the resolution being limited by the optical aperture. In the present invention, the size of any individual detector 14 is smaller than the size of the central diffraction lobe 18, as illustratively depicted in FIGURE 4, and as shown in FIGURE 5 in connection with multiple detectors. The number of detectors within the central spot will vary depending on the particular application, but will be at least three detectors, preferably at least five detectors, and for instance may comprise six to nine detectors in some examples. In general, fewer detectors, (even as low as three or four) may be advantageous in high noise environments.

Another way of configuring the sensor 10 according to Case one is to again utilize a larger number of detectors, but instead of utilizing smaller detectors, adjust the optical system 12 so that more than one detector is spread across the central diffraction lobe. This enables conventional size detectors 14 to be utilized. The number of detectors utilized is the same as previously discussed. In order to configure the optical system 12 as described above, it is preferable that the back focal length of the optical system 12 is adjusted, which is a well known procedure. Multiple detectors spread across the central diffraction lobe in accordance with this embodiment are also depicted in FIGURE 5.

In a second case, the sensor 10 is configured to take multiple images of objects in a known pattern that moves each image by a known amount. This is accomplished by the sensor 10 viewing the object at different angles, wherein each image of the object corresponds to a different angle. The viewing at different angles is accomplished by the movement of the sensor 10 induced by jitter in the spacecraft or vehicle. This also is accomplished by jitter induced

4

by a mirror included in the optical system 12.

In Scanning systems, it is preferable not to generate multiple image data by viewing the object at different times. This is because it requires that the object remain stationary while the different images are being taken. Thus, it is preferable to utilize detectors 14 configured in a multi-linear array as shown in FIGURE 6. The multi-linear array 20 includes a number of individual linear arrays 22 arranged in a parallel configuration staggered apart by a distance (d) which is a fraction of a pixel. When the array 20 is swept, each linear array 22 generates imaging data corresponding to one scan line of each of the images. Thus, each linear array 22 corresponds to one of the images being produced. In the preferred embodiment, the array 20 includes ten or more individual linear arrays 22 which are capable of producing ten or more different images.

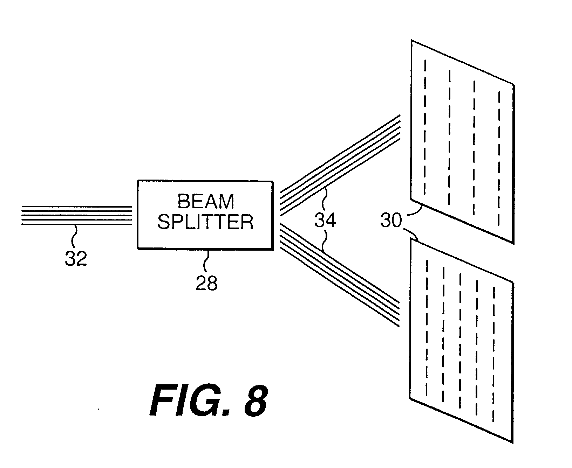

In a third case, the sensor 10 is configured to take images of objects in multiple color bands. In Scanning systems, this is again accomplished by utilizing a multi-linear array, as shown in FIGURE 7. The multi-linear array 24 also includes a number of individual linear arrays 22 arranged in a parallel configuration staggered apart by a distance (d) which is a fraction of a pixel. However, a color filter 26 is disposed over each of the linear arrays 22. The color filters 26 are configured to pass only a particular portion of the color spectrum which may include one or more different wavelengths of visible light. When the array 24 is swept, each linear array 22 produces images of the same object in different color bands. The filters 26 are fabricated by disposing layers of optical coatings on transparent substrates, which are then placed over each of the linear arrays 22, which is a well known process.

In Starring systems, the multiple color band imaging data is accomplished by incorporating a beam splitter in the optical system 12 and utilizing more than one detector matrix array. Such a configuration is illustrated by the diagram of FIGURE 8. The beam splitter 28 is utilized to split the incoming light 32 into multiple light beams 34 which in this case is two. Due to the operation of the beam splitter 28 each of the light beams 34 includes a different portion of the color spectrum which may include one or more different wavelengths of visible or infrared light. Each light beam is then directed to one of the detector arrays 30 which produces the images of the same object in different color bands.

In a fourth case, the sensor 10 is configured to have a combination of the three previously described cases. This is accomplished by combining the principles discussed in regard to case one, two or three. In regard to all of the cases previously described, the sensor must be configured to have a signal to noise ratio which is high as possible. This is accomplished by either increasing the integration time of the detectors 14 or by slowing down the scan speed as much as possible for scanning systems. For case two, the system's design or its operation mode, or both are changed in order to take the required multiple images in a known pattern displaced by a known distance that is not a multiple of a pixel, but rather is a multiple of a pixel plus a known fraction of a pixel.

Referring back to FIGURE 1, coupled to the detectors 34 is a processor 16 which is utilized to process the imaging data in order to attain the higher resolution. The processing includes recovering "lost" information from the imaging data which is utilized to provide the higher resolution. Even though the diffraction blur destroys the required spatial resolution, some of the "lost" spatial information still exists spread across the focal plane. Oversampling the diffraction blur in conjunction with processing the data correctly, enables much of this "lost" information to be recovered and thus enables the image to be restored to a higher spatial resolution than classical diffraction would allow.

The processor 16 accomplishes the above described processing by utilizing one of five alternative image processing techniques including a Linear Algebra Technique, Multiple Image Reconstruction Technique, Non-linear Reconstruction Technique, Non-linear Multiple and Reconstruction Technique and various combinations of the above four techniques. Which of the above techniques is utilized by the processor 16, determines how the sensor 10 according to the present invention is configured.

For the Linear Algebra Technique, Non-linear Reconstruction Technique and Non-linear Multiple Band Reconstruction Technique, the sensor 10 must be configured according to Case one. For the Non-linear Multiple Band Reconstruction Technique, the sensor 10 must also be configured according to Case three. For the Multiple Image Reconstruction Technique, the sensor 10 only has to be configured according to Case two. However, in order to achieve better results with Multiple Image Reconstruction Technique, it is preferred that the sensor 10 is also configured according to Case one.

One reasonable extension of the previously described imaging techniques is to utilize phase retrieval or wave front phase information to reconstruct the image and thus achieve the higher resolution. Another reasonable extension of the previously described technique is to utilize prior knowledge of the background scene of interest to help resolve objects that have recently moved into the scene. The processor 16 in addition to utilizing one of the above described primary data processing techniques, also utilizes other techniques to further process the imaging data. This further processing is accomplished by standard image enhancement techniques which are further utilized to improve the reconstructed image. Such techniques include, but are not limited to edge sharpening, contrast stretching or contrast enhancement techniques.

The Linear Algebra Technique is based on the following principles:

The action of Point Spread Function on an Object Vector (f) is represented by a Matrix **(A)** which are utilized to get a Resulting Smoothed Image Vector **(g)**, where **g** is represented by the following formula;

$$g = Af \qquad (1)$$

The Matrix **(A)** gives the result of a 2-D Convolution of the Point Spread Function with the Object Vector **(f)** when it operates on the Object Vector. The Matrix **(A)** Transforms the Ideal Object Vector **(f)** to the Image Vector **(g)** which is actually obtained by the sensor. The Image Vector **(g)** is expressed by:

$$g_k = \Sigma_i A_{ki} f_i \qquad (2)$$

In an actual sensor, the signal produced by the detectors is the real image plus the noise **($g_j + n_j$)**, where **$n_j$** equals the noise of the **jth** pixel. Thus, the signal is rougher than the image **(g)**. In addition, **$A^{-1}$** must be anti-smoothing, which consequently makes the geometric optics prediction **"f = $A^{-1}$ (g + n)"** extremely rough and very inaccurate. Further, the noise prevents the use of $A^{-1}$ to get **f** from a real signal. This kind of problem is said to be "ill-posed".

In order to overcome the difficulty with noise, a Linear Algebra Technique has been developed that utilizes a regularization parameter ($\alpha$) to estimate the Object Vector **(f)**, which includes the following steps:

- Define **f'** to be the estimated Object vector and **g'** to be the Measured Signal Vector which is equal to **g + n**.

- Bound **f'** so that it cannot get too large. For example, let **E =** the maximum signal energy, then $\|f\|^2 \leq E^2$.

- Place a bound on the expected noise error, $\|Af'- g'\|^2 \leq \in^2$.

- Then **f'** is the vector which makes both non-negative real numbers $\|f'\|^2$ **and** $\|Af'- g'\|^2$ as small as possible.

- Define **f'** to be a vector which minimizes $\|Af'-g'\|^2/\in^2 + \|f'\|^2/E^2 = (1/\in)^2$ [$\|Af' - g'\|^2 + \alpha\|f'\|^2$], where $\alpha = \in^2/E^2$.

- Thus, it can be shown that **f' = = [$A^T A + \alpha]^{-1}A^T g'$**, which is the classical form of the solution. The size of a chosen specifies the relative importance of removing the effects of noise from the estimate **f'**. When $\alpha$ is small **($\in^2$ << $E^2$)**, little noise is expected in **g'**. When a a is large, much noise is expected in **g'**.

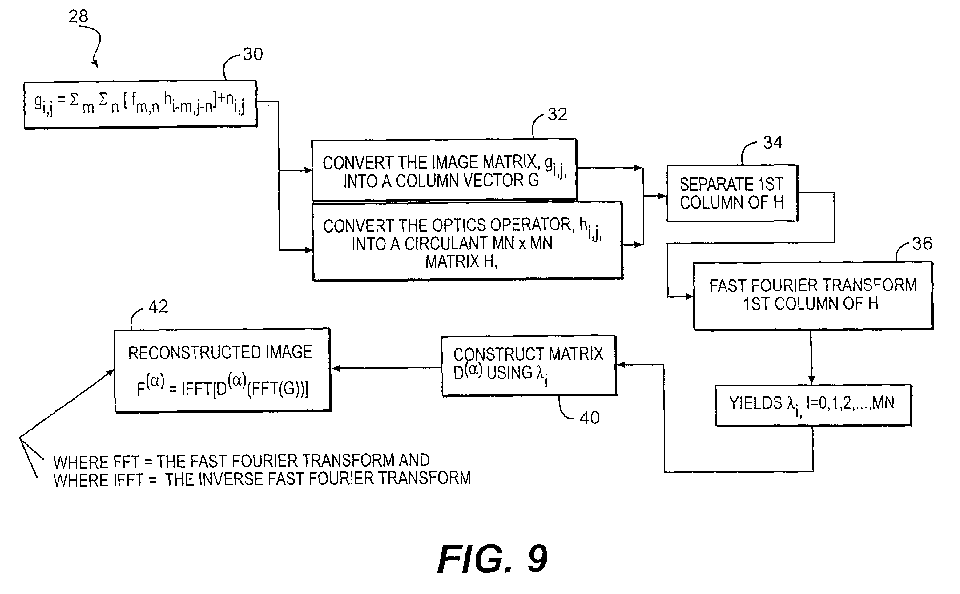

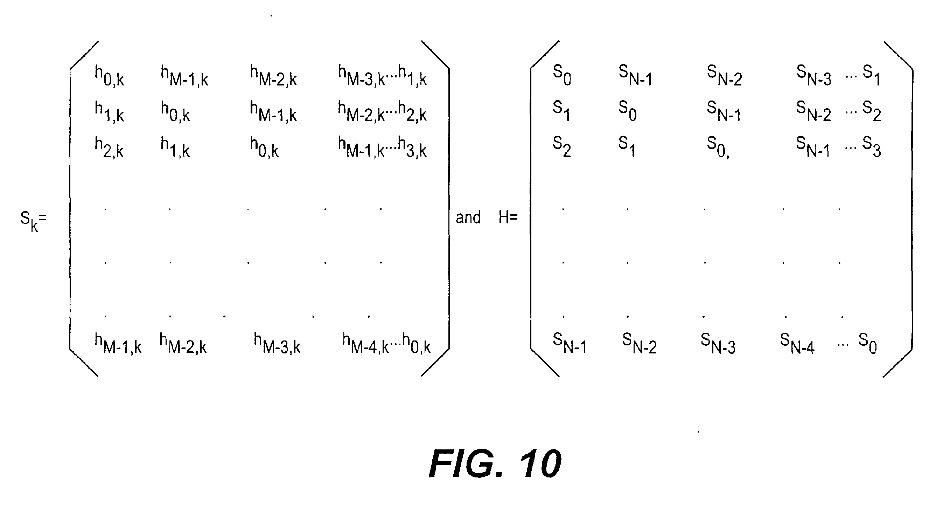

The above described Linear Algebra Technique is not the preferred way of calculating **f'**. This is because the expression **f' = [$A^T A + \alpha]^{-1}A^T g'$** is not in a useful form for calculating **f'** due to large rounding errors and the large number of mathematical operations required. In order to overcome these difficulties, the problem has to be recast into a different form, which will now be described in conjunction with FIGURE 9.
Referring to FIGURE 9, a flow diagram of the Linear Algebra Technique according to the present invention is shown. The technique 28 first converts the imaging data collected by the optical system of the sensor into an Imaging Matrix of the form **$g_{i,j} = \Sigma_m\Sigma_n f_{m,n} h_{i-m,j-n} + n_{i,j}$30**, where **$g_{i,j}$** represents the blurred noisy image, **$f_{i,j}$** is a matrix representation of the object, **$h_{i,j}$** is a matrix representation of the point spread function of the optical system and **$n_{i,j}$** is a matrix representation of the noise associated with the imaging data.
Next, the Image Matrix **$g_{i,j}$** is converted into a column vector **G** 32. This is accomplished by converting both matrices **$f_{i,j}$** and **$n_{i,j}$** into column vectors by the method known as "Column stacking". Converting the matrix **$g_{i,j}$** into the column vector **G** 32 results in the Optics Operator Matrix **$h_{i,j}$** being converted into a Circulant MN x MN matrix H. The Circulant Matrix **H** is defined by a list of sub-matrices $S_k$ having the form as shown in FIGURE 10.
Still referring to FIGURE 9, after step 32, the **1st** column of the matrix **H** is separated 34 which then enables a Fast Fourier Transform to be performed on the **1st** column of **H** 36. Taking the Fast Fourier Transform 36 yields a complex 1 x MN vector $\lambda_i$, where **i = 0,1,2,....., MN-1** 38. Next, the Matrix **$D^{(\alpha)}$** is constructed by utilizing the vector $\lambda_i$ 40. **D($\alpha$)** is a diagonal MN X MN matrix which is constructed by making its diagonal elements equal to a vector $L_i^{(\alpha)}$ and all other elements equal to zero, where **$L_i^{(\alpha)} = \lambda_i^*/\{|\lambda_i|^2 + \alpha\}$** and $\lambda_i^*$ is the complex conjugate of $\lambda_i$.
Finally, the reconstructed image **($F^{(\alpha)}$)** is formed 42 by the following expression:

$$F^{(\alpha)} = \text{IFFT}[D^{(\alpha)}(\text{FFT}(G))] \qquad (3)$$

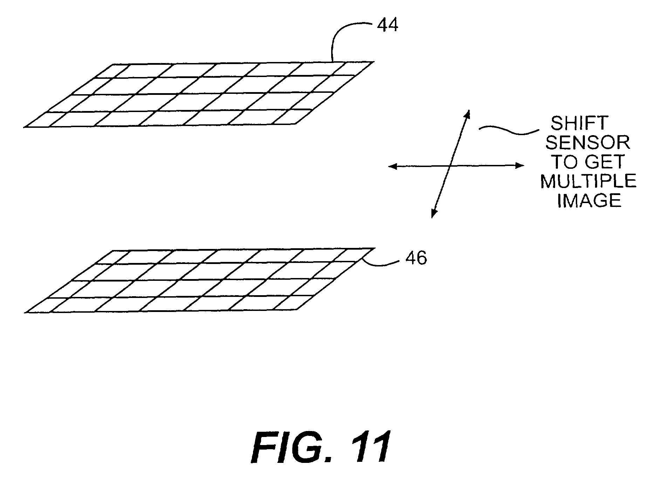

where FFT is a Fast Fourier Transform and IFFT is an inverse Fourier Transform. The reconstructed image **($F^{(\alpha)}$)** includes much of the lost special resolution which was lost due to diffraction blurring effects.
Referring to FIGURE 11, there is shown a diagram illustrating the Multiple Image Reconstruction Technique according to the present invention. This technique involves taking **N** shifted images of a mixer grid 46 utilizing a pixel grid 44 which has been shifted against the mixer grid 46 by a known pattern of sub-pixel distances. The pixel grid 44 represents the image of the object. Each pixel is equal to the corresponding detector IFOV's, while the mixer grid 46 is a representation of the object at the desired resolution.

The pixel intensity $(\mathbf{I_{p,i}})$ is calculated for each pixel of the pixel grid 44 by the following expression:

$$I_{p,i} = \Sigma_m \ W_{m,p,i} I_m, \tag{4}$$

where **p** represents the p<sup>th</sup> pixel, **i** represents the i<sup>th</sup> image, $\mathbf{I_m}$, is the intensity of the of the **m**<sup>th</sup> mixer and $\mathbf{W_{m,p,i}}$ is a weighing function based on the point spread function of the optical system and any associated atmospheric transmittance. It should be noted, that $\mathbf{I_m}$ is unknown and is solved by an iteration process. This iteration process includes making an initial guess for $\mathbf{I_m}$ and then converging $\mathbf{I_m}$ to the lowest error value.

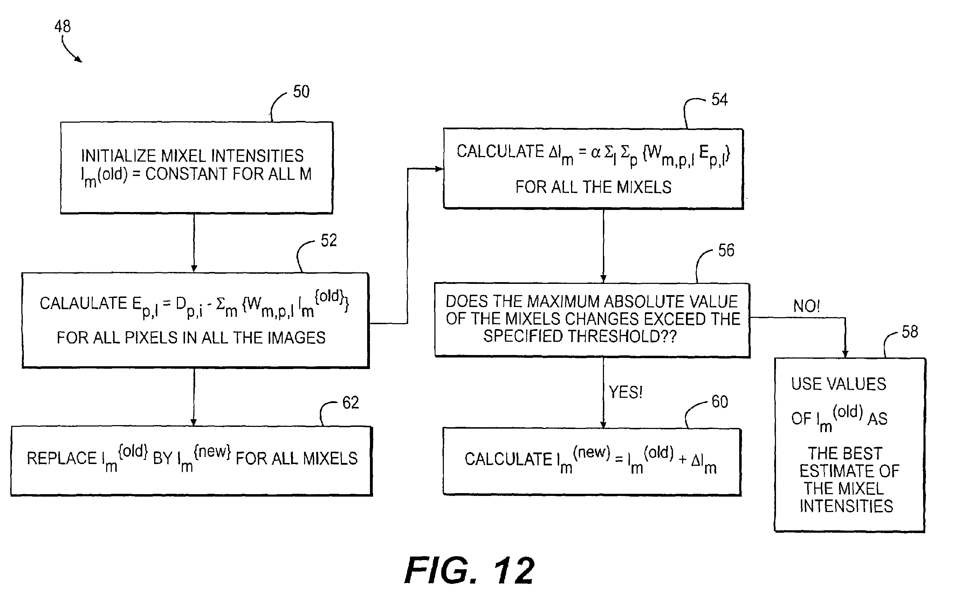

Referring to FIGURE 12, a flow diagram of the Multiple Image Reconstruction Technique according to the present invention is shown. The technique 48 first initializes the mixel intensities and equates the values with a parameter $\mathbf{I_m^{(old)}}$ 50. At this point in the technique, the mixel intensities $\mathbf{I_m^{(old)}}$ are constant for all **m** and as previously described are an initial guess. Next, $\mathbf{E_{p,i} = D_{p,i} - \Sigma_m \{W_{m,p,i} I_m^{(old)}\}}$ is calculated for all pixels in all of the images 52. Where $E_{p,i}$ represents the intensity difference of the **p**<sup>th</sup> pixel in the i<sup>th</sup> image between $D_{p,i}$, which is equal to the measured intensity including the noise of the p<sup>th</sup> pixel in the i<sup>th</sup> image, and the contribution of the current estimate of the intensities of the mixels $I_m^{(old)}$.

Then $\Delta\mathbf{I_m} = \alpha\Sigma_i\Sigma_p\{W_{m,p,i}E_{p,i}\}$ is calculated for all mixels 54. Where $\Delta\mathbf{I_m}$ is the estimate of how much to change the initial mixel intensity which has been equated to $\mathbf{I_m^{(old)}}$ and a is an empirically chosen "convergence" parameter. Next, the technique checks to see if the maximum absolute value of the mixel changes. $(\Delta\mathbf{I_m})$ exceed the specified threshold? 56. If $\Delta\mathbf{I_m}$ does not exceed the threshold, the values of $\mathbf{I_m^{(old)}}$ are used as the best estimate of the mixer intensities.

If $\Delta\mathbf{I_m}$ does exceed the threshold, then $\mathbf{I_m^{(new)} = I_m^{(old)} + \Delta I_m}$ is calculated 60, where $\mathbf{I_m^{(new)}}$ represents new values for the mixel intensities which were calculated utilizing $\Delta\mathbf{I_m}$. Next, replace $\mathbf{I_m^{(old)}}$ by $\mathbf{I_m^{(new)}}$ for all mixels 62. Replacing $\mathbf{I_m^{(old)}}$ by $\mathbf{I_m^{(new)}}$ 62 equates the new values for the mixel intensities with $\mathbf{I_m^{(old)}}$ which enables steps 52,54,56,58,60 to be repeated for these new values. This loop will be continually repeated until the values of the mixel changes $(\Delta\mathbf{I_m})$ exceed the specified threshold as specified in step 56.

The Non-Linear Reconstruction Technique utilizes a probability density function technique based upon the Poisson Distribution which seeks to maximize its log by utilizing an iterative process. The image model is given by the following expression:

$$I(j) = \Sigma_i h(j) - i)e^{s(i)}, \tag{4}$$

where **S(i)** is the vector utilized to generate the object data for **i = 1,2,3,.....N.** Then $e^{s(i)}$ is the intensity of the **ith** object pixel. Further, **h(j)** is the vector function derived from the system's point spread function, while **I(j)** is the intensity of the jth image pixel without noise.

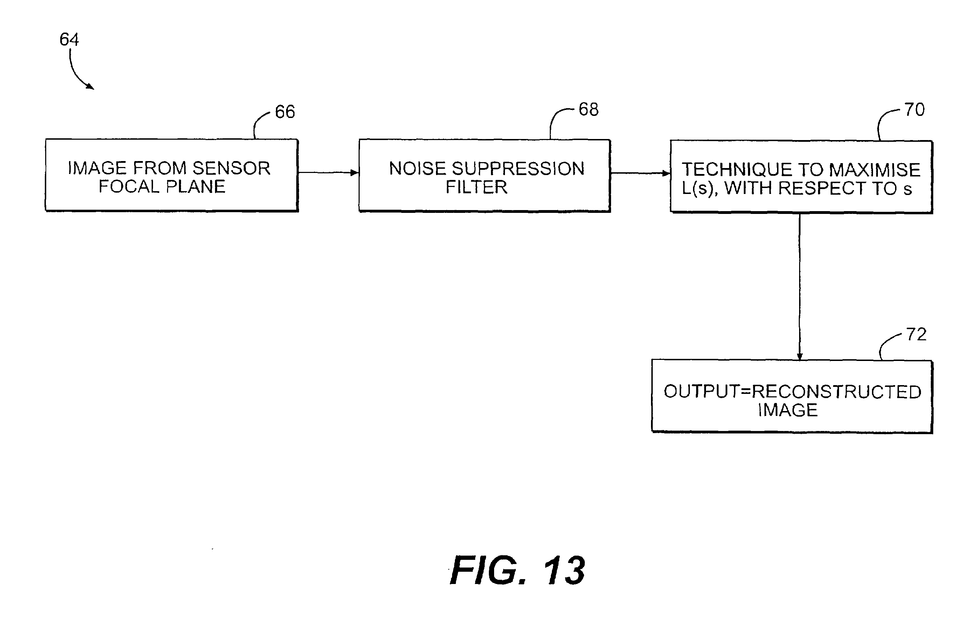

Referring to FIGURE 13, there is shown a flow diagram of the Non--Linear Reconstruction Technique according to the present invention. First the image from the sensor focal plane 66 is produced, where the image is expressed by **D(j)** which is **I(j)** (Expression 4) corrupted by noise. **D(j)** represents the actual data measured by the sensor. Next, a noise suppression filter 68 is utilized to eliminate the noise which is measured by the sensors. After filtering out the noise 68, a Technique to maximize **L(s)** with respect to **S** 70 is utilized to produce an output equal to the reconstructed image 72. The expression **L(S)** is the logarithm of the probability density function which is expressed by:

$$L(s) = \Sigma_i\{D(j)1n(I(j)) - I(j)\} \tag{5}$$

In order to accomplish step 70, the values for the particular **S(i)'s** must be found which maximize the expression **L(s)**. There are several techniques that can be utilized to accomplish this maximizing. One such technique involves taking the derivative of **L(s)** with respect to **S** and then setting it equal to zero. This technique leads to an expression that is similar to an integral equation. Applying Piquard's method of iteration leads to the following iterative expression:

$$S^{(new)}(i) = S^{(old)}(i) + 1n\{\Sigma_i h(j - i)D(j)/1^{(old)} (j)\} - 1n\{K\}, \tag{6}$$

where **1n{K} = $\Sigma_i$h(j - i)**. As previously mentioned, there are other techniques available to perform the maximizing of **L(s)**.

The Non-Linear Multiple Band Reconstruction Technique involves combining images in different color bands of the same object in order to reproduce the image in the desired spatial resolution. As previously described, the different images are produced by modifying the sensor of the present invention according to Case three. This technique is similar to the previously described Non-Linear Reconstruction Technique, except that multi-band imaging data is utilized. The Non-Linear Multiple Band Reconstruction Technique also utilizes a probability density function technique based the Poisson Distribution which seeks to maximize its log by utilizing an iterative process. The image model is given by the following expression:

$$I_k(j) = \Sigma_i h(j - i)e^{s(i)}, \qquad (7)$$

where the multiple bands are denoted by **K and S(i)** is the vector utilized to generate the object data for i = **1,2,3,.....N**. Then $e^{s(i)}$ is the intensity of the **ith** object pixel. Further, **$h_k$(j)** is the vector function derived from the system's point spread function for the **Kth** band, while **I(j)** is the intensity of the **jth** image pixel in the **Kth** band without noise.

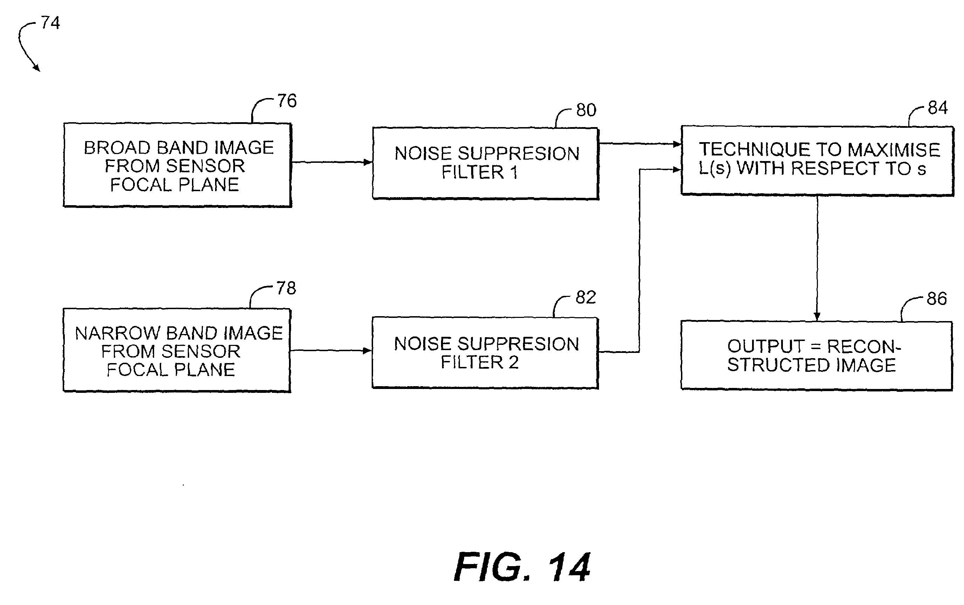

Referring to FIGURE 14, a flow diagram of the Non-Linear Multiple Band Reconstruction Technique according to the present invention. First the broad band and narrow images from the sensor focal plane 76,78 is produced, where the image is expressed by **$D_k$(j)** which is **$I_k$(j)** (Expression 4) corrupted by noise. **D(j)** represents the actual multi-band imaging data measured by the sensor. Next, noise suppression filters 80,82 are utilized to eliminate the noise in both the narrow and broad bands.

After filtering out the noise 80,82, both bands are combined and then processed by a Technique to maximize **L(s)** with respect to S 84 to produce an output equal to the reconstructed image 86. The expression **L(s)** is the logarithm of the probability density function which is expressed by:

$$L(s) = \Sigma_k\Sigma_j\{D_K(j)\, 1n(I_K(j)) - I_K(j)\} \qquad (8)$$

In order to accomplish step 84, the values for the particular **S(i)'s** must be found which maximize the expression **L(s)**. This is the same problem described in the Non-Linear Reconstruction Technique and can be solved in a similar manner.

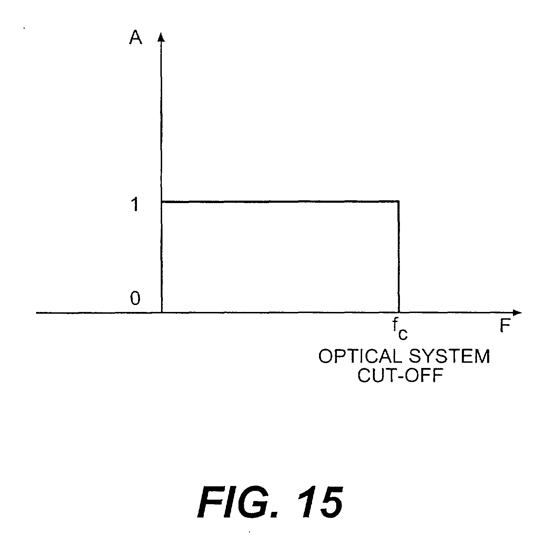

Figure 15 shows the Fourier transform of an improved resolution image in accordance with the present invention and depicts the optical transfer function of the system and method herein. It is noted that all frequency components passed by the optical system are retained in the image, up to the cut-off frequency of the optical system.

It should be noted that the present invention is not limited to any one type of optical sensor device. The principles which have been described herein apply to many types of applications which include, but are not limited to Optical Earth Resource Observation Systems (both Air and Spaceborne), Optical Weather Sensors (both Air and Spaceborne), Terrain Mapping Sensors (both Air and Spaceborne), Surveillance Sensors (both Air and Spaceborne), Optical Phenomenology Systems (both Air and Spaceborne), Imaging Systems that utilize optical fibers such as Medical Probes, Commercial Optical Systems such as Television Cameras, Telescopes utilized for astronomy and Optical Systems utilized for Police and Rescue Work. The imaging device/method disclosed herein may be used on a satellite, and a means for controlling the satellite which is located on the earth may be provided.

While the invention has been particularly shown and described with reference to preferred embodiments thereof, it will be understood by those skilled in the art that changes in form and details may be made therein without departing from the spirit and scope of the present invention.

**Claims**

1. An optical sensor comprised of an optical system having a numerical aperture which provides a corresponding resolution and a detector array for providing high spatial resolution imaging data for use in improving said resolution, wherein said detector array has at least three detectors which are spread across the central lobe of the diffraction pattern which is determined by said numerical aperture.

2. The sensor according to claim 1, wherein said detector array has a number of detectors selected from the group of three detectors or four detectors spread across the central lobe of the diffraction pattern.

**3.** The sensor according to claim 1, wherein said detector array has at least five detectors spread across the central lobe of the diffraction pattern.

**4.** The sensor according to claim 3, wherein said detector array has from six to nine detectors spread across the central lobe of the diffraction pattern.

**5.** The sensor according to claim 1, further comprising:
means for processing said imaging data provided by said detector array for providing said sensor with a desired level of spatial resolution which is substantially higher than said corresponding level of spatial resolution.

**6.** The sensor according to claims 1 or 5, wherein the optical system is diffraction limited.

**7.** The sensor according to claim 5, wherein said desired level of spatial resolution has image components only up to the spatial cut-off frequency of the optical system.

**8.** The sensor according to claim 6, wherein each detector of said detector array has an "instantaneous field of view" which is less than said desired level of spatial resolution.

**9.** The sensor according to claim 6, wherein said detectors are arranged in a configuration which is a linear array, a multi-linear array, or a matrix array.

**10.** The sensor according to claim 9, wherein said multi-linear array includes a different color filter disposed over each individual linear array.

**11.** The sensor according to claim 10, wherein said optical system further includes a beam splitter for dividing the light focused onto said focal plane into two beams of light.

**12.** The sensor according to claim 11, further including a second detector array, wherein each of said detector arrays is associated with one of the two beams of light produced by said beam splitter.

**13.** The sensor according to claim 5, wherein said processing means utilizes a technique selected from the group consisting of a Linear Algebra Technique, a Multiple Image Reconstruction Technique, a Non-Linear Reconstruction Technique, and a Non-Linear Multiple Band Reconstruction Technique.

**14.** The sensor according to claim 13, wherein the selected technique is a Linear Algebra Technique.

**15.** The sensor according to claim 14, wherein said Linear Algebra Technique utilizes the relationship.

$$F^{(\alpha)}=IFFT[D^{\alpha}(FFT(G))]$$

where FFT(G) is a Fast Fourier Transform of an imaging vector derived from said imaging data and IFFT[D$^{\alpha}$(FFT(G))] is an inverse Fast Fourier Transform of a function comprised of said Fast Fourier Transform and a matrix representing the point spread function of said corresponding aperture, which is derived from said imaging data.

**16.** The sensor according to claim 14, wherein said Linear Algebra Technique, includes:

converting said imaging data into an Imaging Matrix ($g_{i,j}$) ;
converting said Image Matrix ($g_{i,j}$) into a Column Vector (G) including a Circulant Matrix (H);
separating a column from said Circular Matrix (H);
performing a Fast Fourier Transform on said column to produce a vector ($\lambda_i$) ;
constructing Diagonal Matrix D$^{(\alpha)}$ utilizing said vector ($\lambda_i$) ; and
forming a reconstructed image by the following expression:

$$F^{(\alpha)} = IFFT[D^{\alpha}(FFT(G))]$$

where FFT is a Fast Fourier Transform and IFFT is an inverse Fourier Transform.

**17.** The sensor according to claim 16, wherein said Imaging Matrix ($g_{i,j}$) is expressed by:

$$g_{i,j} = \Sigma_m \Sigma_n f_{m,n} h_{i-m,j-n} + n_{i,j},$$

where $g_{i,j}$ represents the blurred noisy image, $f_{i,j}$ is a matrix representation of the object, $h_{i,j}$ is a matrix representation the point spread function of the optical system and $n_{i,j}$ is a matrix representation of the noise associated with the imaging data.

**18.** The sensor according to claim 16, wherein said column is a first column of said Circulant Matrix (H).

**19.** The sensor according to claim 16, wherein said Diagonal Matrix $D^{(\alpha)}$ is constructed by making the diagonal elements of $D^{(\alpha)}$ equal to the vector $L_i^{(\alpha)}$ and all other elements equal to zero, wherein $L_i^{(\alpha)} = \lambda_i^* \backslash \{|\lambda_i|^2 + \alpha\}$ and $\lambda_i^*$ is the complex conjugate of $\lambda_i$.

**20.** The sensor according to claim 13 wherein the selected technique is Multiple Image Reconstruction Technique.

**21.** The sensor according to claim 20, wherein said Multiple Image Reconstruction Technique, includes:

    providing an initial value for pixel intensities which is equated to $I_m^{(old)}$;
    calculating pixel energy for all of the images ($E_{p,i}$) by utilizing $I_m^{(old)}$;
    calculating changes in mixel intensities ($\Delta I_m$) by utilizing $E_{p,i}$;
    utilizing the values of $I_m^{(old)}$ as the estimate of the mixel intensities, if said changes in mixel intensities ($\Delta I_m$) does not exceed a specified threshold;
    calculating new mixel intensities ($I_m^{(new)}$) by adding $\Delta I_m$ to $I_m^{(old)}$, if said changes in mixel intensities ($\Delta I_m$) does exceed said specified threshold; and
    equating $I_m^{(old)}$ with said new mixel intensities ($I_m^{(new)}$).

**22.** The sensor according to claim 21, wherein said pixel energy for all of the images ($E_{p,i}$) is calculated by:

$$E_{p,i} = D_{p,i} - \Sigma_m \{W_{m,p,i} I_m^{(old)}\},$$

wherein $D_{p,i}$ is the measured intensity including noise of the $p^{th}$ pixel in the $i^{th}$ image and $W_{m,p,i}$ is a weighting function based on a point spread function of said optical system and any associated atmospheric transmittance.

**23.** The sensor according to claim 21, wherein said changes in mixel intensities ($\Delta I_m$) is calculated by:

$$\Delta I_m = \alpha \Sigma_i \Sigma_p \{W_{m,p,i} E_{p,i}\},$$

wherein $\alpha$ is an empirically chose "convergence" parameter and $W_{m,p,i}$ is a weighting function based on a point spread function of said optical system and any associated atmospheric transmittance.

**24.** The sensor according to claim 13 wherein the selected technique is a Non-Linear Reconstruction Technique.

**25.** The sensor according to claim 24 wherein said Non-Linear Reconstruction Technique includes determining the values for the S(i)'s which maximize L(s) where

$$L(s) = \Sigma_1 \{D(j) \ln(I(j)) - I(j)\},$$

and

$$I(j) = \Sigma_1 h(j-i) e^{S(i)}$$

and

S(i) is the vector utilized to generate the object data for i = 1,2,3 . . . . N

$e^{S(i)}$ is the intensity of the ith pixel,

h(j) is the vector function derived from the system's point spread function,

I(j) is the intensity of the j(th) pixel without noise, and

D(j), which is the expression I(j) corrupted by noise, is said imaging data.

26. The sensor according to claims 16, 21, or 25 wherein said optical system is diffraction limited.

27. A method for increasing the spatial resolution of an optical sensor including an optical system for focusing light onto a focal plane and a detector array located at said focal plane for converting the light into electrical signals, said optical system having a predetermined numerical aperture which provides a corresponding level of spatial resolution, said method comprising the steps of:

    providing a detector array wherein at least three detectors are spread across the central lobe of the diffraction pattern which is determined by said numerical aperture, and
    processing said electrical signals in order to provide a desired level of spatial resolution which is substantially higher than said corresponding level of spatial resolution.

28. The method according to claim 27 wherein said desired level of spatial resolution has image components only to the spatial cut-off frequency of the optical system.

29. The method according to claim 27 wherein said processing employs linear algebra which utilizes the relationship:

$$F^{(\alpha)} = IFFT[D^{\alpha}(FFT(G))]$$

where FFT(G) is a Fast Fourier Transform of an imaging vector derived from said imaging data and $IFFT[D^{\alpha}(FFT(G))]$ is an inverse Fast Fourier Transform of a function comprised of said Fast Fourier Transform and a matrix representing the point spread function of said corresponding aperture, which is derived from said imaging data.

30. The method according to claim 27 wherein said processing utilizes a Non-Linear Reconstruction Technique which includes determining the values for the S(i)'s which maximize L(s) where

$$L(s) = \Sigma_1\{D(j)\ln(I(j)) - I(j)\},$$

and

$$I(j) = \Sigma_1 h(j-i)e^{S(i)}$$

and

    S(i) is the vector utilized to generate the object data for i = 1,2,3 . . . . N
    $e^{S(i)}$ is the intensity of the ith pixel,
    h(j) is the vector function derived from the system's point spread function,
    I(j) is the intensity of the j(th) pixel without noise, and
    D(j), which is the expression I(j) corrupted by noise, is said imaging data.

31. The method according to claims 28, 29, or 30 wherein said optical system is diffraction limited.

10

12

OPTICAL
SYSTEM

14

DETECTORS

16

PROCESSOR

# FIG. 1

14

28

# FIG. 2

14

30

# FIG. 3

**FIG. 4**

**FIG. 5**

**FIG. 6**

**FIG. 7**

**FIG. 8**

28

30

$$g_{i,j} = \Sigma_m \Sigma_n [f_{m,n} h_{i-m,j-n}] + n_{i,j}$$

32

CONVERT THE IMAGE MATRIX, $g_{i,j,}$ INTO A COLUMN VECTOR G

CONVERT THE OPTICS OPERATOR, $h_{i,j,}$ INTO A CIRCULANT MN x MN MATRIX H,

34

SEPARATE 1ST COLUMN OF H

36

FAST FOURIER TRANSFORM 1ST COLUMN OF H

42

RECONSTRUCTED IMAGE

$$F^{(\alpha)} = \text{IFFT}[D^{(\alpha)}(\text{FFT}(G))]$$

CONSTRUCT MATRIX $D^{(\alpha)}$ USING $\lambda_i$

40

YIELDS $\lambda_{i,}$ I=0,1,2,...,MN

WHERE FFT = THE FAST FOURIER TRANSFORM AND
WHERE IFFT = THE INVERSE FAST FOURIER TRANSFORM

*FIG. 9*

EP 1 096 295 A1

$$S_k = \begin{pmatrix} h_{0,k} & h_{M-1,k} & h_{M-2,k} & h_{M-3,k} \cdots h_{1,k} \\ h_{1,k} & h_{0,k} & h_{M-1,k} & h_{M-2,k} \cdots h_{2,k} \\ h_{2,k} & h_{1,k} & h_{0,k} & h_{M-1,k} \cdots h_{3,k} \\ \cdot & \cdot & \cdot & \cdot \quad \cdot \\ \cdot & \cdot & \cdot & \cdot \quad \cdot \\ \cdot & \cdot & \cdot & \cdot \quad \cdot \\ h_{M-1,k} & h_{M-2,k} & h_{M-3,k} & h_{M-4,k} \cdots h_{0,k} \end{pmatrix} \quad \text{and} \quad H = \begin{pmatrix} S_0 & S_{N-1} & S_{N-2} & S_{N-3} \cdots S_1 \\ S_1 & S_0 & S_{N-1} & S_{N-2} \cdots S_2 \\ S_2 & S_1 & S_{0,} & S_{N-1} \cdots S_3 \\ \cdot & \cdot & \cdot & \cdot \quad \cdot \\ \cdot & \cdot & \cdot & \cdot \quad \cdot \\ \cdot & \cdot & \cdot & \cdot \quad \cdot \\ S_{N-1} & S_{N-2} & S_{N-3} & S_{N-4} \cdots S_0 \end{pmatrix}$$

## FIG. 10

FIG. 11

44

46

SHIFT
SENSOR
TO GET
MULTIPLE
IMAGE

EP 1 096 295 A1

EP 1 096 295 A1

48

50

INITIALIZE MIXEL INTENSITIES
$I_m(old)$ = CONSTANT FOR ALL M

52

CALAULATE $E_{p,I} = D_{p,i} - \Sigma_m \{W_{m,p,I} I_m^{\{old\}}\}$
FOR ALL PIXELS IN ALL THE IMAGES

54

CALCULATE $\Delta I_m = \alpha \Sigma_I \Sigma_p \{W_{m,p,I} E_{p,I}\}$
FOR ALL THE MIXELS

56

DOES THE MAXIMUM ABSOLUTE VALUE
OF THE MIXELS CHANGES EXCEED THE
SPECIFIED THRESHOLD??

NO!

58

USE VALUES

OF $I_m^{(old)}$ AS

THE BEST
ESTIMATE OF
THE MIXEL
INTENSITIES

YES!

60

CALCULATE $I_m^{(new)} = I_m^{(old)} + \Delta I_m$

62

REPLACE $I_m^{\{old\}}$ BY $I_m^{\{new\}}$ FOR ALL MIXELS

**FIG. 12**

64

66

IMAGE FROM SENSOR
FOCAL PLANE

68

NOISE SUPPRESSION
FILTER

70

TECHNIQUE TO MAXIMISE
L(s), WITH RESPECT TO s

72

OUTPUT=RECONSTRUCTED
IMAGE

*FIG. 13*

```
                ┌─────────────────┐         ┌─────────────────┐         ┌─────────────────────┐
                │ BROAD BAND IMAGE│  ┌─76    │ NOISE SUPPRESION│  ┌─80   │ TECHNIQUE TO MAXIMISE│ ┌─84
                │ FROM SENSOR     │──│──────▶│ FILTER 1        │──│──────▶│ L(s) WITH RESPECT TO s│ │
                │ FOCAL PLANE     │         │                 │         │                     │
                └─────────────────┘         └─────────────────┘         └─────────────────────┘
```

BROAD BAND IMAGE FROM SENSOR FOCAL PLANE — 76

NOISE SUPPRESION FILTER 1 — 80

TECHNIQUE TO MAXIMISE L(s) WITH RESPECT TO s — 84

NARROW BAND IMAGE FROM SENSOR FOCAL PLANE — 78

NOISE SUPPRESION FILTER 2 — 82

OUTPUT = RECON-STRUCTED IMAGE — 86

74

**FIG. 14**

EP 1 096 295 A1

A

1

0

$f_c$

F

OPTICAL SYSTEM
CUT-OFF

*FIG. 15*

**European Patent Office**

**EUROPEAN SEARCH REPORT**

Application Number

EP 99 12 1512

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | US 4 549 204 A (BERTERO) 22 October 1985 (1985-10-22) * abstract * * column 1, line 24 - line 66 * * column 2, line 24 - column 3, line 6 * * column 3, line 49 - line 51 * * column 4, line 40 - line 58 * | 1-9,13, 14,27 | G02B27/58 |
| A | * figures 1,2 * | 15,26, 29,31 | |
| Y | US 3 957 376 A (CHARSKY) 18 May 1976 (1976-05-18) * column 3, line 4 - line 19 * * column 3, line 21 - line 31 * * column 5, last paragraph - column 6, line 11 * * figures 1,3 * | 1-9,13, 14,27 | |
| A | US 4 093 866 A (KASDAN) 6 June 1978 (1978-06-06) * column 6-1, line 7 - line 12 * * column 14, line 67 - column 15, line 14; figure 5 * | 1-4,27 | TECHNICAL FIELDS SEARCHED (Int.Cl.7) G01N |
| A | US 4 164 788 A (JAIN) 14 August 1979 (1979-08-14) * abstract * | 1,27 | |

The present search report has been drawn up for all claims

| Place of search | Date of completion of the search | Examiner |
|---|---|---|
| THE HAGUE | 10 April 2000 | Thomas, R.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**
                                                    EP 99 12 1512

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2000

| Patent document cited in search report | | Publication date | Patent family member(s) | | Publication date |
|---|---|---|---|---|---|
| US 4549204 | A | 22-10-1985 | CA | 1204312 A | 13-05-1986 |
| | | | DE | 3243890 A | 09-06-1983 |
| | | | FR | 2522910 A | 09-09-1983 |
| | | | GB | 2113501 A,B | 03-08-1983 |
| | | | JP | 58122514 A | 21-07-1983 |
| | | | NL | 8204551 A | 16-06-1983 |
| US 3957376 | A | 18-05-1976 | DE | 2458807 A | 31-07-1975 |
| | | | FR | 2259349 A | 22-08-1975 |
| | | | JP | 1117187 C | 15-10-1982 |
| | | | JP | 50105153 A | 19-08-1975 |
| | | | JP | 57006044 B | 03-02-1982 |
| US 4093866 | A | 06-06-1978 | CA | 1082811 A | 29-07-1980 |
| | | | CH | 619045 A | 29-08-1980 |
| | | | DE | 2715066 A | 13-10-1977 |
| | | | GB | 1580981 A | 10-12-1980 |
| | | | JP | 52121354 A | 12-10-1977 |
| US 4164788 | A | 14-08-1979 | NONE | | |

EPO FORM P0459

For more details about this annex : see Official Journal of the European Patent Office, No. 12/82